# EUROPEAN PATENT APPLICATION

(11) **EP 4 454 519 A1**
(43) Date of publication of application: **30.10.2024**
(21) Application number: 23382385.5
(22) Date of filing: 26.04.2023
(51) Int. Cl.: A47J 31/42, A47J 31/36, A47J 31/44

(54) **AUTOMATIC COFFEE MACHINE**

(71) Applicant: Taurus Research and Development S.L.U., 25790 Oliana (ES)
(72) Inventor: TRENCH ROCA, Lluís, 08650 Sallent (ES); VICENTE MOLINERO, Valentín, 01010 Vitoria-Gasteiz (ES); ALET VIDAL, Josep, 25790 OLIANA (ES)
(74) Representative: Torner, Juncosa I Associats, SL

(57) **Abstract**

The present invention discloses an automatic coffee machine comprising a housing having a structure; a coffee bean grinder for grinding coffee beans into coffee powder; and an infusion unit for infusing the coffee powder coming from the coffee bean grinder, said infusion unit comprising: an infusion chamber for infusing coffee powder with water; a closing plunger for closing the infusion chamber and pressing the coffee powder therein; and an expulsion piston for expulsing the coffee from the infusion chamber after infusion; wherein the infusion unit is a self-supporting infusion unit that is attached to the structure of the housing.

It is also disclosed a method of assembling an automatic coffee machine according to invention, the method comprising the steps of: assembling the self-supporting infusion unit; and attaching the self-supporting infusion unit to the structure of the housing of the automatic coffee machine.

## Description

### Technical field

The present invention relates to the field of coffee machines. In particular, the present invention relates to an automatic coffee machine and a method for assembling the same.

### Background of the Invention

Automatic coffee machines, also known as super automatic coffee machines, automate the coffee making process, from coffee bean grinding to coffee brewing, so that the user loads the automatic coffee machine with coffee beans and obtains a coffee beverage, or simply coffee, typically of the espresso type.

CN109464013A discloses a known super automatic coffee machine comprising a housing; a coffee bean grinder for grinding coffee beans into coffee powder; and an infusion unit for infusing the coffee powder coming from the grinder. The infusion unit disclosed by CN109464013A comprises an infusion chamber for infusing coffee powder with water; a closing plunger for closing the infusion chamber and pressing the coffee powder therein; and an expulsion piston for expulsing the coffee from the infusion chamber after infusion.

As automatic coffee machines must carry out several operations in order to obtain coffee from the coffee beans, automatic coffee machines, as the one disclosed by CN109464013A, are complex and comprise a great number of different elements that perform one or more steps needed to obtain coffee from coffee beans, as for example, a coffee bean grinder, a water heater, a water tank, an infusion unit, etc. Likewise, the infusion unit typically comprises multiple elements in order to be able to obtain coffee from coffee powder obtained from the coffee bean grinder.

Assembling such number of elements is a relatively complex and time-consuming process that has room for improvement.

Moreover, in known automatic coffee machines, testing the infusion unit typically requires testing once it has already been installed in the coffee machine, thereby requiring extensive cleaning after the test, so that the machine sold to the costumer is perfectly clean. In this regard, it should be born in mind that coffee powder and coffee grounds are very difficult to clean. Alternatively, all elements of an infusion unit can be tested before being assembled to the coffee machine. However, this approach requires a test assembly of the elements of the infusion unit, that once the test has been completed needs to be disassembled in order to install the elements of the infusion unit in the corresponding automatic coffee machine. In this approach, the different elements of the infusion units can be cleaned more easily when compared to when they are tested already installed on the machine. However, such test may not be representative as it does not test the different elements in its final assembly configuration and requires the elements to be disassembled from its tests assembly and later on to be installed in their specific location in the automatic coffee machine.

### Description of the Invention

The present invention aims to provide an automatic coffee machine that it is easier to assemble, and disassemble, for example, in case of malfunction, and that has an infusion unit that it is easier to test. In particular, according to a first aspect of the present invention, it is disclosed an automatic coffee machine comprising a housing having a structure; a coffee bean grinder for grinding coffee beans into coffee powder; and an infusion unit for infusing the coffee powder coming from the bean grinder, said infusion unit comprising: an infusion chamber for infusing coffee powder with water; a closing plunger for closing the infusion chamber and pressing the coffee powder therein; and an expulsion piston for expulsing the coffee from the infusion chamber after infusion; wherein the infusion unit is a self-supporting infusion unit that is attached to the structure of the housing.

In the present invention, a self-supporting infusion unit is understood as an infusion unit with its elements grouped so that they are self-supported, that is to say, the elements defining the infusion unit are arranged so that they keep their relative position even if they are not placed in their final assembly location within the automatic coffee machine.

The automatic coffee machine object of the present invention allows the infusion unit to be easily assembled, tested and cleaned outside the automatic coffee machine, and in particular, outside the structure of the housing. This results in a faster and more efficient assembling of the automatic coffee machine, that also leads to better results as it is possible to easily test all infusion units and to thoroughly clean them before they are installed in the corresponding automatic coffee machine. Additionally, being able to test the infusion unit outside the housing of the automatic coffee machine also avoids soiling said housing and the rest of components housed therein while testing the components after their installation, thus, also avoiding the need to clean them before shipping the automatic coffee machine to a costumer.

It should be reminded that coffee powder is very difficult to clean, especially in nooks and crannies, as it gets easily stuck in surfaces. Perfectly cleaning the interior of known automatic coffee machines after its infusion assembly has been tested in the assembly line is very difficult, or at least, very time consuming, as coffee powder and coffee grounds stick to the inner surfaces of the casing. When a customer buys an automatic coffee machine expects to find it perfectly clean and with no visible sign of use, even if such use was for quality testing. Although it could seem a solution to the problem of cleaning the automatic coffee machine after testing of the infusion unit, avoiding such test, so that it is not necessary to clean the automatic coffee machine, is also very undesirable as it can lead to serious quality issues of the manufactured automatic coffee machines.

According to the first aspect of the present invention, the self-supporting infusion unit may comprise a structural element, the infusion unit being supported by said structural element. That is to say, the self-supporting infusion unit comprises a structural element to which the infusion chamber, the closing plunger and the expulsion piston are attached so that they are supported and kept in their relative positions by said structural element.

According to the first aspect of the present invention, the self-supporting infusion unit may be attached to the structure of the housing in a removable manner. In this way, the self-supporting infusion unit may be easily removed from the housing of the automatic coffee machine, for example, for maintenance or even replacement, if needed.

According to the first aspect of the present invention, the infusion chamber and the expulsion piston may be housed in an infusion assembly, said infusion assembly being removably attached to the structural element. Preferably, the infusion assembly is removably attached to a support joined to the structural element. Preferably, the housing comprises an opening for the removal and insertion of the infusion assembly. Said opening of the housing is preferably closed by a cover or similar.

Due to the properties of coffee powder and the remains of the coffee brewing process, i.e. coffee grounds, the infusion assembly may require relatively frequent maintenance, including cleaning. Being able to remove the infusion assembly is advantageous in this respect. It also aids in replacing the infusion assembly if it is necessary.

According to the first aspect of the present invention, the support of the infusion assembly may be joined to the structural element by a rotatable shaft driven by a motor supported by the structural element, so that the infusion assembly can be pivotally moved from a coffee loading position, wherein coffee powder falls from the coffee bean grinder to the infusion chamber through an opening thereof, to a coffee infusion position, wherein the opening of the infusion chamber is aligned with the closing plunger, and vice versa.

According to the first aspect of the present invention, the closing plunger may be driven by a motor via a worm gear.

According to the first aspect of the present invention, the structural element may be a single element. Preferably, the single structural element is a beam.

According to a second aspect of the present invention, it is disclosed a method of assembling an automatic coffee machine according to the first aspect of the present invention, the method comprising the steps of:
- assembling, or mounting, the self-supporting infusion unit; and
- attaching the self-supporting infusion unit to the structure of the housing of the automatic coffee machine.

As stated hereinabove in the context of the first aspect of the present invention, this method of assembling an automatic coffee machine allows for an easier and faster assembling of the components as the whole infusion unit can be easily assembled outside the automatic coffee machine, and in particular, outside its casing, and can later be installed in its designated location.

According to the second aspect of the present invention, the infusion unit may be tested to ensure correct operation of the closing plunger and expulsion piston before attaching the self-supporting infusion unit to the structure of the housing. This avoids soiling the interior of the automatic coffee machine, and thus, the need to clean said interior, due to the tests conducted to the infusion unit.

According to the second aspect of the present invention, the infusion unit may be cleaned before the self-supporting infusion unit is attached to the structure of the housing. This allows easier cleaning of the infusion assembly before being installed in the corresponding automatic coffee machine.

According to the second aspect of the present invention, the self-supporting infusion unit may be attached to the structure using removable attaching means. This allows easier replacement or maintenance of the whole infusion unit if needed.

According to the second aspect of the present invention, the self-supporting infusion unit may be placed in an assembling, or mounting, position following a direction transversal to the automatic coffee machine, that is to say, the self-supporting infusion unit is placed in its location within the automatic coffee machine following a direction perpendicular to the lateral sides thereof.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

### Brief description of the Figures

The foregoing and other advantages and features will be more fully understood from the following detailed description of an embodiment with reference to the accompanying drawings, to be taken in an illustrative and non-limitative manner, in which:
Fig. 1 shows a perspective view of an exemplary embodiment of an automatic coffee machine according to the present invention.
Fig. 2 shows a side view of the exemplary embodiment of an automatic coffee machine without one side panels of the casing and with its infusion assembly in its coffee infusion position.
Fig. 3 shows a side view of the exemplary embodiment of an automatic coffee machine without side panels of the casing and with its infusion assembly in its coffee loading position.
Fig. 4 shows a side view of the self-supporting infusion unit of the exemplary embodiment of an automatic coffee machine in its coffee infusion position.
Fig. 5 shows a perspective view of the self-supporting infusion unit of the exemplary embodiment of an automatic coffee machine in its coffee loading position.
Fig. 6 shows a cross section of the self-supporting infusion unit of the exemplary embodiment of an automatic coffee machine in its coffee infusion position.

### Detailed Description of the Invention and of particular embodiments

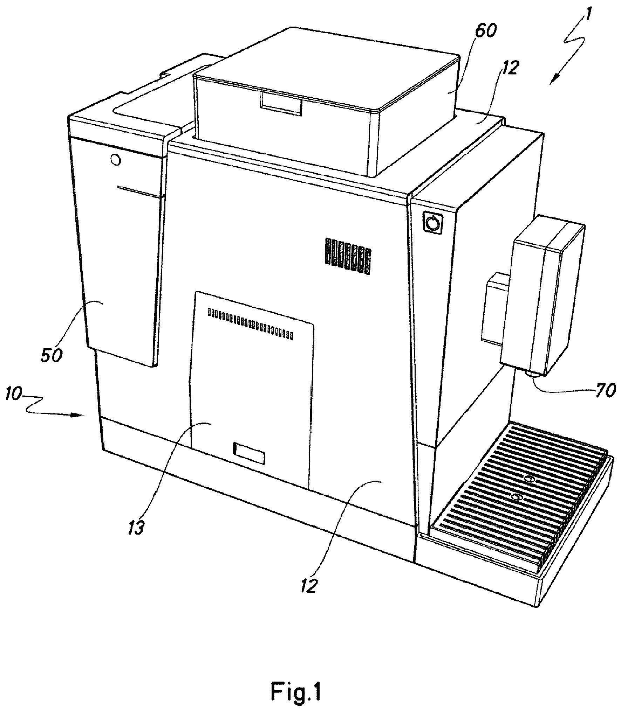

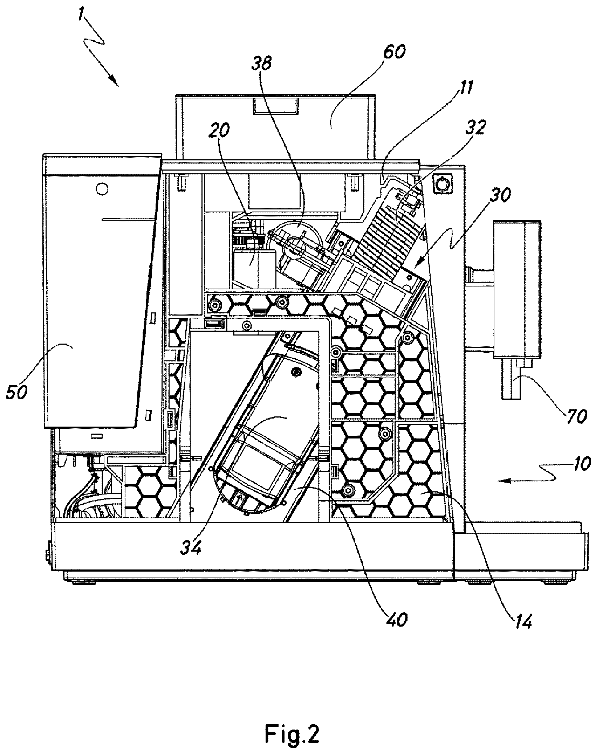

A perspective view of an exemplary embodiment of an automatic coffee machine 1 according to the present invention can be seen in Fig. 1. Said automatic coffee machine 1 comprises a housing 10 comprising a structure 11 (see Fig. 2) closed by panels 12.

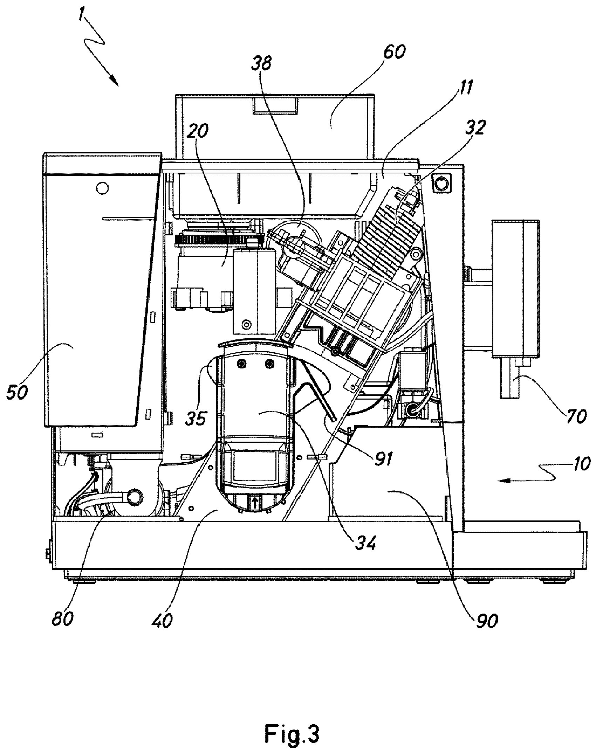

In this exemplary embodiment, the lateral panel 12 proximal to the infusion unit 30 (see Fig. 2) comprises an opening closed by a door or removable cover 13 that allows extraction of the infusion assembly 34, in embodiments wherein said infusion assembly 34 is removable, as in this case. However, in other embodiments the infusion assembly 34 may not be removable. Said opening and corresponding door or cover 13 is optional, as it may also be possible to remove or open the entire lateral panel 12 proximal to the infusion assembly 34 for its removal and/or insertion, for maintenance, replacement, or any other reason. Said lateral panel 12 can also be entirely removed for removing and/or inserting the infusion unit 30 (see Figs. 2 and 3).

In this exemplary embodiment, on the front part of the housing 10, the automatic coffee machine 1 comprises a coffee outlet 70 and on the back part a water tank 50. The water tank 50 is preferably removable, so that it can be removed from the automatic coffee machine 1 for filling or cleaning the same, for example. However, said water tank 50 can also be non-removable, i.e., fixed to the housing 10. In this exemplary embodiment, the coffee outlet 70 protrudes from the front part of the housing 10. However, in other embodiments the coffee outlet 70 may be different than the one shown. There are multiple alternatives known in the art for a coffee outlet of a coffee machine that could be used in an automatic coffee machine 1 according to the present invention.

On its upper part, the automatic coffee machine 1 of this exemplary embodiment comprises a coffee bean hopper 60 that also serves as a coffee bean container and conducts the coffee beans stored therein to a coffee bean grinder 20 (see Fig. 2 or 3). Although in this exemplary embodiment said bean hopper 60 protrudes from the upper panel 12 of the housing 10, in other embodiments said hopper 60 may be flush with it, or can be placed somewhere else in the automatic coffee machine 1, although an upper placement is preferred as it allows the coffee to fall by gravity from the hopper 60 to the coffee grinder 20 and from said coffee grinder 20 to the infusion chamber 31 (see below). In certain embodiments, said hopper 60 could be removable.

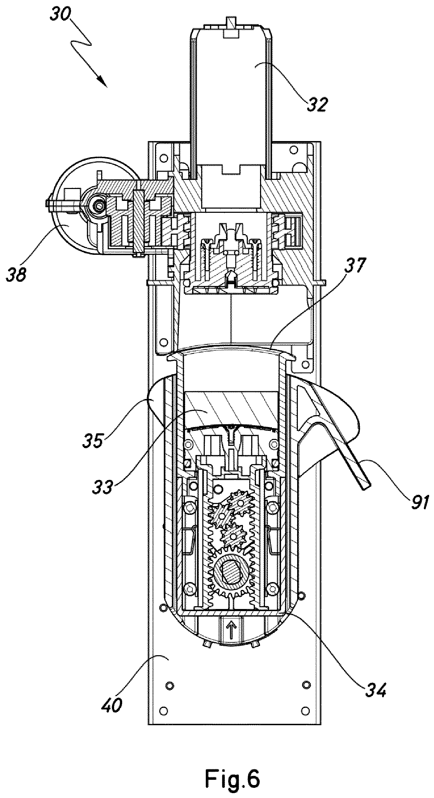

In Fig. 2 can be seen a side view of the exemplary embodiment of an automatic coffee machine 1 shown in Fig. 1 wherein the side panel 12 proximal to the infusion unit has been removed so that internal elements of the automatic coffee machine 1 can be seen. Fig. 2 shows the infusion unit 30, and in particular, the infusion assembly 34, in the coffee infusion position, wherein the infusion chamber 31 and its opening 37 (see Fig. 6) are aligned with the closing plunger 32.

Fig. 3 shows a similar view to Fig. 2, but with the internal panel 14 removed and the infusion unit 30, and in particular, the infusion assembly 34, in the coffee loading position, wherein coffee powder falls from the coffee bean grinder 20 the infusion chamber 31 through an opening 37 thereof (see Fig. 6). Said internal panel 14, among other benefits, serves as a structural element of the structure 11 of the housing 10 and increases its structural integrity and can be easily removed and installed in order to gain access to the infusion unit 30. Moreover, in this exemplary embodiment, the cover 13 is removably attached to said internal panel 14 by snap-fitting in such a way that the cover 13 is flush with the lateral panel 12. However, in other embodiments said cover 13, if any, may be fixed in a different manner than the one previously described.

As described above, coffee beans are stored in the coffee bean hopper 60 that, by gravity, conducts coffee beans to the coffee bean grinder 20, or simply grinder 20, located beneath said hopper 60. The grinder 20, instructed by the control device of the automatic coffee machine 1 (not shown), powders coffee beans coming from the coffee bean hopper 60 until it reaches the amount of powdered coffee necessary for the preparation of the desired coffee. Said control device of the automatic coffee machine 1 also instructs the motor 36 to move the infusion assembly 34 to the coffee loading position so that coffee powder falls from the coffee bean grinder 20 to the infusion chamber 31 (see Fig. 6), as depicted in Fig. 3. Once the desired amount of coffee powder has been loaded into the infusion chamber 31 the control device of the automatic coffee machine 1 drives the motor 36 so that the infusion assembly 34 is moved to its coffee infusion position, wherein the infusion chamber 31, and in particular, its opening 37, is aligned with the closing plunger 32, as shown in Fig. 2.

When the infusion assembly 34 is in its coffee infusion position, the control device of the automatic coffee machine 1 operates the motor 38 of the closing plunger 32 so that it moves downwards towards the infusion chamber 31 to press the coffee powder previously placed therein and to close the opening 37, so that the infusion chamber 31 is closed and the coffee powder therein can be infused with water, in particular, hot water coming from a water heater (not shown) via a water pump 80, to prepare the coffee beverage, or simply coffee, that is served via the coffee outlet 70.

In this exemplary embodiment, the closing plunger 32 is driven by the motor 38 via a worm gear, although in other embodiments other driving mechanism can be used. By controlling the number of revolutions of the closing plunger 32, or any of the driving elements thereof, the degree of compaction or pressing, which can vary depending on the preparation or recipe, of the coffee can be controlled. Nonetheless, in other embodiments other means to control the compaction pressure of the coffee powder can be used, for example, by using a pressure sensor.

Once coffee has been served via the coffee outlet 70, coffee grounds are removed from the infusion chamber 31 and fall by gravity to the coffee grounds container 90 guided by the discharge ramp 91. Said discharge ramp 91 is optional, although it is preferred, as it greatly reduces the risk that coffee grounds fall outside the container 90. Coffee grounds are removed from the infusion chamber 31 by the expulsion piston 31, that will be described in the context of Fig. 6. In order to be able to remove the coffee grounds from the infusion chamber 31, the closing plunger 32 previously returns to is retracted position so that the opening 37 of the infusion chamber 31 is opened, thereby allowing passage of the coffee grounds.

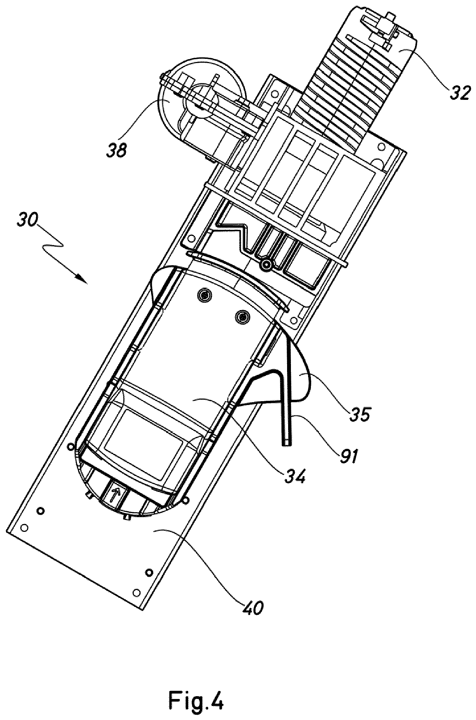

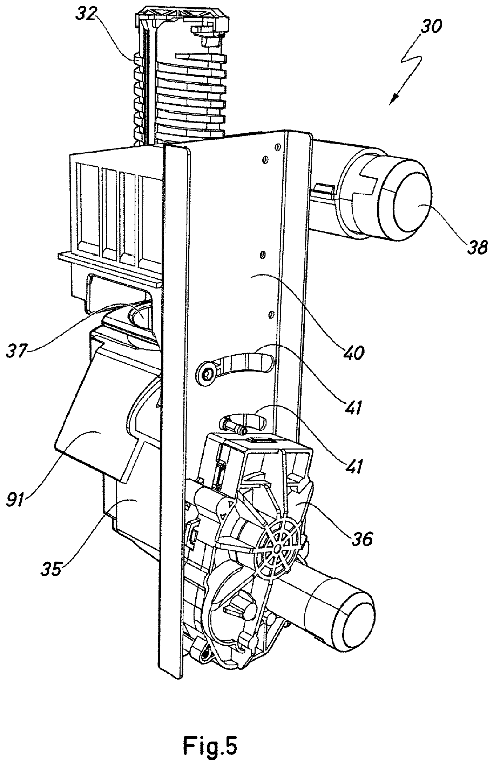

Figs. 4 and 5 show a side and a perspective view, respectively, of the infusion unit 30 of the exemplary embodiment of an automatic coffee machine according to the present invention previously shown in Figs. 1 to 3. As can be seen, in this exemplary embodiment, the infusion assembly 34, which comprises the infusion chamber and the expulsion piston 33, the motor 36 for driving said infusion assembly, the closing plunger 32 and its corresponding driving motor 38 are supported by a structural element 40, thus defining a self-supporting infusion unit. In this exemplary embodiment, the beam is U-shaped, although in other embodiments, it could have a different shape. In other embodiments the structural element 40 may be different than the one shown herein.

These figures show the infusion assembly 34 removably attached to a support 35 that is supported by the structural element 40, in this case, the beam. Said support 35 is primarily supported by the beam via a rotatable shaft driven by the motor 36, so that the infusion assembly 34 can be pivotally moved from the coffee loading position to the coffee infusion position, and vice versa. In this exemplary embodiment, the structural element 40 further comprises a pair of slotted holes, or simply slots 41, which aid in guiding the support 35 and the infusion assembly 34. Additionally, the interference of said slots 41 with corresponding protrusions of the base 35, also reduces the force or stress that the shaft has to withstand due to the pressure created by the infusion chamber 31 during infusion of the coffee. In an automatic coffee machine is really important to ensure that all elements can withstand a great number of cycles of operation and, therefore, it is really important to ensure that the element supporting the infusion unit can withstand the stress they suffer during operation. In the exemplary embodiment shown, the structural element 40, as well as the rotatable shaft driving the support 35, are made of a metallic material, for example, steel. Other materials can also be used as long as they have equal or greater mechanical strength.

Fig. 6 shows a section view of the infusion unit 30 depicted on Figs. 4 and 5, so that its internal components can be seen, in particular, the expulsion piston 33 and the infusion chamber 31 which are hidden in previous figures. In this figure, the infusion unit 30 is in its coffee infusion position, that is to say, with the infusion chamber 31 and its opening 37 aligned with the closing plunger 32.

As previously described, once the coffee powder has fallen into the infusion chamber 31 through the opening 37 thereof, the control unit of the automatic coffee machine 1 operates the motor 36 in order to drive the infusion assembly from the coffee loading position to the coffee infusion position, which is shown in Fig. 6, wherein the opening 37 and the infusion chamber 31 are aligned with the closing plunger 32. Once said elements are aligned, the closing plunger, driven by its corresponding motor 38, advances towards the infusion chamber 31 following an axial direction. By advancing in the axial direction, the closing plunger 32 reaches a position wherein it closes the opening 37 and, thus, also closes the infusion chamber 31. After the infusion chamber 31 is closed, if the closing plunger 32 continues advancing reaches a position in which it comes into contact with the powder coffee previously placed in the infusion chamber 31, after this position, by controlling the advance of the closing plunger 32, the degree of compression, also known as tamping, of the coffee powder is controlled.

Once the desired degree of compression or tamping of the coffee powder is reached, said coffee powder can be infused with hot water in the infusion chamber 31 to obtain coffee.

Once coffee has been obtained, coffee grounds need to be removed from the infusion chamber 31 so that a new coffee can be prepared. In order to do so, the infusion assembly 34 comprises an expulsion piston 33 that moves in an axial direction towards the opening 37 of the infusion chamber 37, thereby pushing the coffee grounds out of the infusion chamber 37. As in the coffee infusion position the infusion assembly 34 is inclined in respect to a vertical direction, as the expulsion piston 33 advances, coffee grounds fall from the infusion chamber 31 through the opening 31. The discharge ramp 91 aids in guiding the coffee grounds falling from the infusion chamber 31 to the container 90 for coffee grounds. Once the container 90 is full, it can be emptied treating the coffee grounds as organic waste.

It will be understood that various parts of one embodiment of the invention can be freely combined with parts described in other embodiments, even being said combination not explicitly described, provided that such combination is within the scope of the claims and that there is no harm in such combination.

## Claims

1. Automatic coffee machine (1) comprising a housing (10) having a structure (11); a coffee bean grinder (20) for grinding coffee beans into coffee powder; and an infusion unit (30) for infusing the coffee powder coming from the bean grinder (20), said infusion unit (30) comprising:
- an infusion chamber (31) for infusing coffee powder with water;
- a closing plunger (32) for closing the infusion chamber and pressing the coffee powder therein; and
- an expulsion piston (33) for expulsing the coffee from the infusion chamber (31) after infusion;
**characterized in that** the infusion unit (30) is a self-supporting infusion unit that is attached to the structure (11) of the housing (10).

2. Automatic coffee machine (1), according to claim 1, wherein self-supporting infusion unit comprises a structural element (40), the infusion unit (30) being supported by said structural element (40).

3. Automatic coffee machine (1), according to claim 1 or 2, wherein the self-supporting infusion unit is attached to the structure (11) of the housing (10) in a removable manner.

4. Automatic coffee machine (1), according to according to any of the preceding claims, wherein the infusion chamber (31) and the expulsion piston (33) are housed in an infusion assembly (34), said infusion assembly (34) being removably attached to the structural element (40).

5. Automatic coffee machine (1), according to claim 4, wherein the infusion assembly (34) is removably attached to a support (35) joined to the structural element (40).

6. Automatic coffee machine (1), according to claim 5, wherein the support (35) of the infusion assembly (34) is joined to the structural element (40) by a rotatable shaft driven by a motor (36) supported by the structural element (40), so that the infusion assembly (34) can be pivotally moved from a coffee loading position, wherein coffee powder falls from the coffee bean grinder (20) to the infusion chamber (31) through an opening (37) thereof, to a coffee infusion position, wherein the opening (37) of the infusion chamber (31) is aligned with the closing plunger (32), and vice versa.

7. Automatic coffee machine (1), according to any one of the preceding claims, wherein the closing plunger (32) is driven by a motor (38) via a worm gear.

8. Automatic coffee machine (1), according to any one of claims 2 to 7, wherein the structural element (40) is a single element.

9. Automatic coffee machine (1), according to claim 8, wherein the single structural element is a beam.

10. Method for assembling an automatic coffee machine (1) according to any one of claims 1 to 9, the method comprising the steps of:
- assembling the self-supporting infusion unit; and
- attaching the self-supporting infusion unit to the structure (10) of the housing (11) of the automatic coffee machine (1).

11. Method, according to claim 10, wherein the infusion unit (30) is tested to ensure correct operation of the closing plunger (32) and expulsion piston (33) before attaching the self-supporting infusion unit to the structure (11) of the housing (10).

12. Method, according to claim 10 or 11, wherein the infusion unit (30) is cleaned before the self-supporting infusion unit is attached to the structure (11) of the housing (10).

13. Method, according to any one of claims 10 to 12, wherein the self-supporting infusion unit is attached to the structure (11) using removable attaching means.

14. Method, according to any one of claims 10 to 13, wherein the self-supporting infusion unit is placed in an assembling position following a direction transversal to the automatic coffee machine (1).
